# NEUE EUROPÄISCHE PATENTSCHRIFT

(11) **EP 0 955 476 B2**
(45) Veröffentlichungstag und Bekanntmachung des Hinweises auf die Entscheidung über den Einspruch: **10.03.2010**
(45) Hinweis auf die Patenterteilung: 27.10.2004
(21) Anmeldenummer: 99108391.6
(22) Anmeldetag: 29.04.1999
(51) Int. Cl.: F16B 13/14, F16B 25/00

(54) **Befestigungsanordnung mit einer selbstschneidenden Schraube zum Einsatz in Beton.**
Fastening device with a self-tapping screw for insertion into construction elements made of concrete.
Dispositif de fixation avec une vis-auto-taraudeuse destinée à être insérée dans des éléments de construction en béton.

(30) Priorität: 08.05.1998 DE 19820671
(43) Veröffentlichungstag der Anmeldung: 10.11.1999
(73) Patentinhaber: fischerwerke GmbH & Co. KG, 72178 Waldachtal (DE)
(72) Erfinder: Frischmann, Albert, 79341 Kenzingen (DE); Zimmermann, Harald, 79312 Emmendingen (DE)
(74) Vertreter: Späth, Dieter

(56) Entgegenhaltungen:
- EP-A1- 0 794 336
- DE-U- 9 216 791
- US-A- 2 690 879
- US-A- 3 897 713

## Beschreibung

Die Erfindung betrifft eine Befestigungsanordnung mit einer selbstschneidenden Schraube gemäß dem Anspruch 1.

Die selbstschneidenden Schrauben sind seit langem bekannt und bestehen meist aus einem Schraubenkern, der mit einem Außengewinde versehen ist, wobei die Gewindeflanken mit verschiedenen Aussparungen sowie mit verschiedenen Flankenwinkeln versehen sind. Derartige Schrauben werden direkt in den Untergrund oder nach der Herstellung einer Bohrung in diese eingedreht. Es ist auch bekannt, daß beim Eindrehen derartiger Schrauben die Randabstände berücksichtigt werden müssen. Bei zu kleinem Randabstand kann bei zunehmender Belastung ein Ausbruch eintreten. Ferner ist bei zunehmender Eindrehtiefe der Schraube ein immer größerer Kraftaufwand notwendig, um eine Befestigung herzustellen.

In der DE Nr. 24 19 111 C2 ist eine Einsatzhülse zum Eindrehen in einer Bohrung einer Wand, die zylindrisch ausgebildet ist und eine spreizdruckfreie Verankerung ermöglicht, dargestellt.

Die Einsatzhülse weist eine Innenhöhlung zur Aufnahme eines Befestigungselements, z. B. einer Schraube, auf. Am Außenmantel der Einsatzhülse ist ein Außengewinde vorgesehen, das mit segmentartigen Aussparungen und Schneidkanten sowie einer Aufnahmekammer für den ausgesparten Wandwerkstoff versehen ist.

Derartige Einsatzhülsen weisen den Nachteil auf, daß sie nur in einer Bohrung einer Wand aus Leichtbaustoff eingesetzt werden können.

In der EP 0 623 759 B1 ist eine gewindeformende Schraube mit einem Außengewinde zum Einsatz in Beton und anderen Baustoffen vorgeschlagen, deren Kerndurchmesser relativ groß ist. Es ist hier vorgesehen, daß das Verhältnis von Außendurchmesser zum Kerndurchmesser etwa 1,25 - 1,5 und das Verhältnis von Außendurchmesser zur Steigung des Gewindes etwa 1,5 - 1,6 beträgt, und daß der Flankenwinkel des Gewindes kleiner als 50 ° und größer oder gleich 35 ° ist.

Eine derartige Schraube verlangt eine relativ große Eindringtiefe der Gewindeflanken im Baustoff, um die Tragfähigkeit voll auszunutzen. Dies wiederum ist nur mit einem Einsatz von hohem Kraftaufwand möglich.

Als nachteilig hat sich gezeigt, daß bei Zugbeanspruchung der Schraube ein vorzeitiger Bruch der Hinterschnittkante stattfindet und somit eine rapide Reduzierung der Tragfähigkeit der Schraube eintritt.

Weiterhin ist aus US 3897713 ein Doppelgewindebolzen zur Befestigung in Kunststoffen bekannt, der an seinem Gewindeabschnitt einen durch Hitze aktivierbaren Kleber trägt. Der Kleber hat die Aufgabe, den Doppelgewindebolzen gegen Herausdrehen bei wiederholtem An- und Abschrauben am gegenüberliegenden Gewindeabschnitt zu sichern. US 2690879 zeigt eine Holz-Metall-Verbindung auf Basis einer Schraube, die mit einem Kleber versehen wird, mit dem Ziel, eine Alterung durch Korrosion der Schraube bzw. Verrottung des Holzes zu verhindern.

Der Erfindung liegt die Aufgabe zu Grunde, eine Befestigungsanordnung in einem Untergrund aus Beton auf Basis einer sebstschneidenden Schraube zu schaffen, die die Befestigung dahingehend verbessert, dass das Eindrehmoment für die Betonschraube verringert und gleichzeitig die Tauglichkeit für rissanfällige Untergründe verbessert wird.

Die Aufgabe der Erfindung ist durch die Merkmale des Hauptanspruchs gelöst.

Dadurch, daß das Bohrloch mit einer aushärtbaren Masse so befüllt ist, daß nach dem Aushärten der Masse das Gewinde teilweise im Beton und teilweise in der ausgehärteten Mörtelschale eingebettet ist, ist der notwendige Kraftaufwand zum Eindrehen der Schraube wesentlich reduziert und die Systemmontage freundlich gestaltet.

Dadurch, daß die Kraftübertragung in axialer Richtung stattfindet und somit kein Aufspreizen eintritt, sind geringere Randabstände bei der Befestigung eines Gegenstands möglich. Dank der Vermörtelung wird die projizierte Hinterschnittfläche vergrößert, was wiederum zur höheren Tragfähigkeit der Schraube führt.

Die Dauerversuche in einem offenen und sich wiederschließenden Riß haben eine gute Tragfähigkeit der erfindungsgemäßen Schraube gezeigt.

Die Befestigung erfolgt in der Weise, daß nach der Herstellung des Bohrlochs und seiner Reinigung eine definierte Menge der aushärtbaren Masse in das Bohrloch gebracht wird. Danach wird die Schraube in das Bohrloch eingedreht. Beim Eindrehen der Schraube wird die aushärtbare Masse in Richtung des Bohrlochmunds transportiert und der Ringspalt zwischen der Bohrlochwandung und der Schraube mit der Masse vollständig befüllt. Nach dem Aushärten der Masse ist das Gewinde der Schraube teilweise im Beton und teilweise in der ausgehärteten Mörtelschale eingebettet.

Die zusätzliche Vermörtelung der Schraube ermöglicht eine Anpassung der Schraubengeometrie an das Bohrloch, die dazu führt, daß die Eindringtiefe des Gewindes so weit reduziert wird, daß ein leichtes Eindrehen der Schraube bei voller Nutzung der Tragfähigkeit der Schraube erreicht wird. Dank der Vermörtelung wird die projizierte Hinterschnittfläche vergrößert, was wiederum zur höheren Tragfähigkeit der Schraube führt, da die Tragfähigkeit der Schraube durch Formschluß im Beton und zusätzlich durch Verkleben mit der Bohrlochwandung erhöht wird.

Ferner wird durch die Vermörtelung eine Abstützung der Gewindeflanken erreicht und damit ein vorzeitiges Ausbrechen des Betongewindes vermieden. Weiterhin werden die auftretenden Toleranzen mit Hilfe von Mörtel ausgeglichen.

In einer weiteren Ausgestaltung der Erfindung kann am vorderen Ende des Schraubenschaftes wenigstens eine in Längsrichtung verlaufende Einkerbung angeordnet sein. Die ebenfalls mit Mörtelmasse ausgefüllte Einkerbung bildet nach der Aushärtung der Mörtelmasse eine das unbeabsichtigte Lösen und Ausdrehen der Schraube verhindernde Arretierung. Durch dynamische an der Schraube angreifende Lasten oder auf das Bauteil wirkende Vibrationen kann bei einer Schraube ohne eine solche Einkerbung ein Losdrehmoment entstehen, das zu einer Lockerung der Schraube und im ungünstigsten Fall zu einem Versagen der Befestigung führt.

In der Zeichnung sind Ausführungsbeispiele dargestellt. Es zeigen:
- Figur 1: eine Schraube nach der Erfindung in der Anfangsphase des Eindrehens
- Figur 2: Einschneidtiefe der Schraube ohne Vermörtelung
- Figur 2a: Einschneidtiefe der Schraube mit Vermörtelung
- Figur 3: die tragende Fläche im Beton vor der Vermörtelung
- Figur 4: die tragende Fläche im Beton mit Vermörtelung
- Figur 5: eine Befestigung mit Hilfe der erfindungsgemäßen Schraube

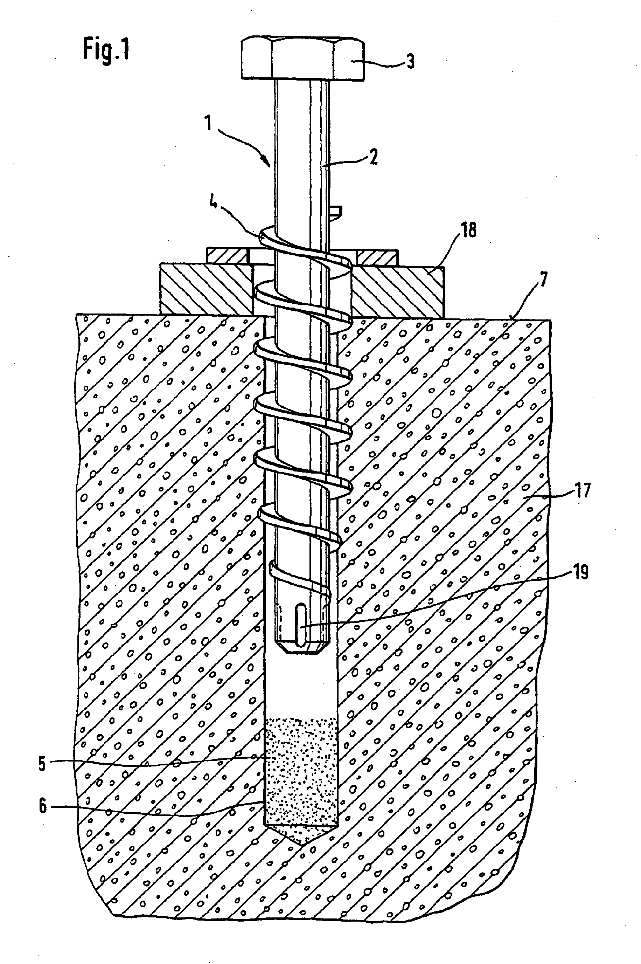

Die in Figur 1 dargestellte Schraube 1 besteht aus einem Schaft 2, einem Schraubenkopf 3 sowie einem Gewinde 4. Die Schraube 1 wird in das mit einer aushärtbaren Masse 5 befüllte Bohrloch 6 eines Untergrunds 17 eingeführt. An der Oberkante 7 des Bohrlochmunds ist ein zu befestigender Gegenstand 18 positioniert, über den die Schraube 1 in das Bohrloch 6 eingedreht wird.

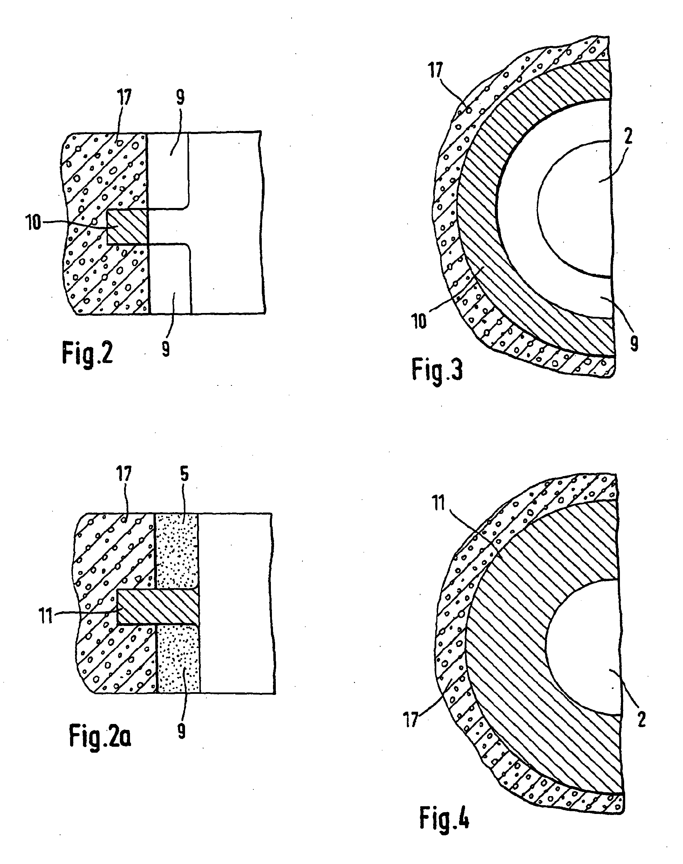

Die in Figur 2 dargestellte Eindringtiefe einer herkömmlichen Schraube zeigt, daß der Ringspalt 9 nicht vermörtelt ist, und daß die tragende Fläche 10 wesentlich kleiner ist als die mit der Vermörtelung des Ringspalts entstehende, tragende Fläche 11, wie die Figur 2a zeigt.

Die Gegenüberstellung der Eindringtiefe der Schraube ohne Vermörtelung des Ringspalts 9, Figur 3, mit der Eindringtiefe der Schraube mit der Vermörtelung des Ringspalts 9 zeigt, daß nach dem Aushärten der Masse die tragende Fläche 11 im Untergrund 17 wesentlich vergrößert wird, was eine entscheidende Bedeutung für die Reduzierung der Flächenpressung und somit die Erhaltung der Tragfähigkeit des Betons hat.

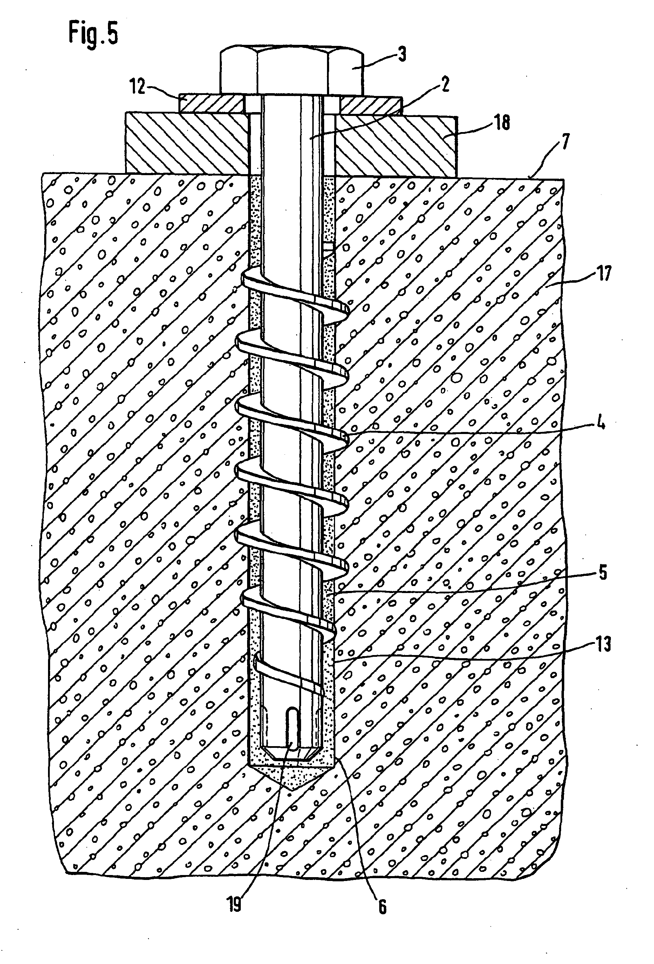

Die abgeschlossene Befestigung eines Gegenstands 18 mit Hilfe der erfindungsgemäßen Schraube nach Figur 5 zeigt, daß die Schraube 1 durch den zu befestigenden Gegenstand 18 in das mit der aushärtbaren Masse 5 befüllten Bohrloch 6 eingeführt wird. Ferner ist zu ersehen, daß die Gewindegänge 4 teilweise im Untergrund 17 und teilweise in der Mörtelschale 13 eingebettet sind.

Der Schraubenschaft 2 weist an seinem vorderen Ende in Längsrichtung verlaufende Einkerbungen 19 auf. Im dargestellten Ausführungsbeispiel sind vier Einkerbungen 19 vorgesehen, die jeweils um 90° zueinander versetzt sind. In diese Einkerbungen dringt beim Setzen der Schraube 1 ebenfalls Mörtelmasse ein, so daß nach dem Aushärten der Mörtelmasse eine Verzahnung mit dem Schraubenschaft 2 erfolgt, die ein unbeabsichtigtes Verdrehen der Schraube 1 verhindert.

## Patentansprüche

1. Befestigungsanordnung in einem Untergrund (17) aus Beton mit einer selbstschneidenden Schraube (1) mit einem Schraubenkopf (3) und einem Schraubenschaft (2), deren Gewinde (4) sich zumindest teilweise über die Länge des Schraubenschaftes (2) erstreckt, wobei die Schraube (1) in einem Bohrloch (6) im Untergrund (17) verankert ist, **dadurch gekennzeichnet, daß** das Bohrloch (6) mit einer aushärtbaren Masse (5) so befüllt ist, daß ein Ringspalt (9) zwischen einer Bohrlochwandung und der Schraube (1) mit der Masse (5) vollständig befüllt ist und daß nach dem Aushärten der Masse (5) das Gewinde (4) der Schraube teilweise im Untergrund (17) und teilweise in der Mörtelschale (5) eingebettet ist.

2. Befestigungsanordnung nach Anspruch 1, **dadurch gekennzeichnet, dass** die Eindringtiefe des Gewindes (4) im Untergrund (17) 30 - 50 % der Gewindehöhe beträgt.

3. Befestigungsanordnung nach Anspruch 1, **dadurch gekennzeichnet, dass** die Schraube mit definierter Einschraubtiefe eingedrückt wird.

4. Befestigungsanordnung nach Anspruch 1, **dadurch gekennzeichnet, dass** die Einschraubtiefe der Schraube (1) das ca. 5- bis 10fache des Durchmessers der Schraube beträgt.

5. Befestigungsanordnung nach Anspruch 1, **dadurch gekennzeichnet, dass** die Schraube (1) mit einem Beschichtungsmittel versehen ist.

6. Befestigungsanordnung nach Anspruch 1, **dadurch gekennzeichnet, dass** am vorderen Ende des Schraubenschaftes (2) wenigstens eine in Längsrichtung verlaufende Einkerbung (19) angeordnet ist.

## Claims

1. Fixing arrangement in a concrete substrate (17), having a self-tapping screw (1) with a screw head (3) and a screw shank (2), the thread (4) of which extends over at least part of the length of the screw shank (2), the screw (1) being anchored in a drilled hole (6) in the substrate (17), **characterised in that** the drilled hole (6) is so filled with a hardenable composition (5) that an annular gap (9) between the wall of the drilled hole and the screw (1) is completely filled with the composition (5) and, when the composition (5) has hardened, the thread (4) of the screw is embedded partly in the substrate (17) and partly in the shell of mortar (5).

2. Fixing arrangement according to claim 1, **characterised in that** the penetration depth of the thread (4) in the substrate (17) is 30 - 50 % of the thread height.

3. Fixing arrangement according to claim 1, **characterised in that** the screw is pushed in to a defined screwing-in depth.

4. Fixing arrangement according to claim 1, **characterised in that** the screwing-in depth of the screw (1) is about 5 to 10 times the diameter of the screw.

5. Fixing arrangement according to claim 1, **characterised in that** the screw (1) is provided with a coating composition.

6. Fixing arrangement according to claim 1, **characterised in that** at the forward end of the screw shank (2) there is arranged at least one longitudinal channel (19).

## Revendications

1. Dispositif de fixation dans une base (17) en béton, comprenant une vis autotaraudeuse (1) avec une tête (3) et une tige (2), dont le filetage (4) s'étend au moins en partie sur la longueur de la tige de vis (2), la vis (1) étant ancrée dans une forure (6) ménagée dans la base (17), **caractérisé en ce que** la forure (6) est remplie d'une matière (5) durcissante de telle sorte qu'un interstice annulaire entre la paroi de la forure et la vis (1) est entièrement rempli avec la masse (5) et qu'après le durcissement de la matière (5), le filetage (4) de la vis (1) est enrobé partiellement dans la base (17) et partiellement dans l'enveloppe de mortier (5) durcie.

2. Dispositif de fixation selon la revendication 1, **caractérisé en ce que** la profondeur de pénétration du filetage (4) dans la base (17) correspond à 30 à 50 % de la hauteur du filetage.

3. Dispositif de fixation selon la revendication 1, **caractérisé en ce que** la vis est enfoncée sur une profondeur de pénétration définie.

4. Dispositif de fixation selon la revendication 1, **caractérisé en ce que** la profondeur de pénétration de la vis (1) est de l'ordre de 5 à 10 fois le diamètre de la vis (1).

5. Dispositif de fixation selon la revendication 1, **caractérisé en ce que** la vis (1) est revêtue d'un agent de revêtement.

6. Dispositif de fixation selon la revendication 1, **caractérisé en ce qu'**au moins une encoche (19), qui s'étend dans le sens longitudinal, est réalisée sur l'extrémité avant de la tige de vis (2).
